(19) Europäisches Patentamt
European Patent Office
Office européen des brevets

(11) Publication number : **0 509 721 A1**

(12) # EUROPEAN PATENT APPLICATION

(21) Application number : **92303215.5**

(22) Date of filing : **10.04.92**

(51) Int. Cl.$^5$ : **C08F 236/16,** C09J 119/00, C09J 111/00

(30) Priority : **17.04.91 US 686552**

(43) Date of publication of application : **21.10.92 Bulletin 92/43**

(84) Designated Contracting States : **BE CH DE ES FR GB IT LI NL PT SE**

(71) Applicant : **LORD CORPORATION**
**2000 West Grandview Boulevard P.O. Box 10038**
**Erie Pennsylvania 16514-0038 (US)**

(72) Inventor : **Kucera, Helmut W.**
**14571 Colver Road**
**West Springfield, Pennsylvania 16443 (US)**

(74) Representative : **Dunlop, Brian Kenneth Charles et al**
**c/o Wynne-Jones, Lainé & James 22 Rodney Road**
**Cheltenham Gloucestershire GL50 1JJ (GB)**

(54) **Halofunctional monomeric adhesion promoters and adhesive compositions.**

(57) Polymeric materials modified with about 0.1 to 10, preferably 2 to 8, percent by weight of certain halofunctional monomeric materials substantially improve adhesion between an elastomeric substrate and a metal surface by improving bonding performance at the elastomer-adhesive interface and by eliminating the need for relatively large amounts of additional adhesive components such as nitroso or carbamate compounds. A preferred embodiment of the invention involves a copolymer derived from a halobutadiene monomer and α-halo-substituted monomeric compounds wherein the α-halo-substituted compound is present in an amount from about 0.1 to 10, preferably 2 to 8, percent by weight of the copolymer. A typical halobutadiene monomer is 2,3-dichlorobutadiene-1,3, while typical α-halo-substituted compounds include α-chloroacrylonitrile, α-bromoacrylonitrile, ethyl-α-bromoacrylate, and ethyl-α-chloroacrylate.

EP 0 509 721 A1

Jouve, 18, rue Saint-Denis, 75001 PARIS

This invention relates to the bonding of metal surfaces to elastomeric substrates with the use of appropriate adhesive compositions. More specifically, the present invention relates to certain halofunctional monomeric materials and the use of the materials to enhance adhesion between elastomeric and metal surfaces.

The bonding of metal surfaces to elastomeric substrates is an evolving art that requires continual advancement and modification of corresponding adhesive systems in order to cope with the rapidly changing automotive and industrial environments in which elastomer-metal assemblies are employed. Recent technological advances in automotive and industrial applications have resulted in relatively severe working environments for adhesively bonded elastomer and metal components. For example, many engine mounting devices which employ elastomer-metal adhesive bonds contain fluids such as ethylene glycol in order to assist in damping of the vibration of the engine. These fluid-filled engine mounting devices are being exposed to increasingly high temperatures such that the elastomer-metal adhesive bonds within the mounts are being exposed to very high temperature fluid environments. In addition, many elastomer-metal assemblies, particularly those utilized in automobile applications, are routinely exposed to materials which contain corrosive salts or other corrosive materials that may act to degrade the elastomer-metal adhesive bond.

Various adhesive compositions have previously been developed in an effort to improve elastomer-metal adhesion and coating technologies. For example, U.S. Patent Nos. 3,256,388 and 3,258,389 disclose the use of a poly-C-nitroso compound to improve the performance of an adhesive composition containing a metal adherent such that the adhesive will bond metal to rubber upon heating under pressure. Various metal adherents disclosed include thermosetting phenol-aldehyde resins, polymers of ethylenically unsaturated materials, and halogenated rubber such as chlorinated natural rubber or chlorinated polychloroprene. In order to foster adhesion with the rubber, the adhesive composition may also contain a vulcanizable polyolefin such as poly 2-chlorobutadiene- 1,3; poly 2,3-dichlorobutadiene-1,3 and after brominated poly 2,3-dichlorobutadiene-1,3.

More specifically, copolymers of 2,3-dichlorobutadiene- 1,3 and α-haloacrylonitrile have been utilized in various adhesive conpositions. For example, Canadian Patent No. 758,155 discloses copolymers of 2,3-dichlorobutadiene-1,3 and α-haloacrylonitriles. The copolymers are prepared by reacting from about 90 to 10 percent by weight of the dichlorobutadiene with about 10 to 90 percent by weight of the α-haloacrylonitrile. The copolymers are utilized in adhesive compositions in combination with film-forming compounds such as chlorinated natural rubber, chlorinated polypropylene, vinyl chloride-vinylidene chloride copolymers and phenolic resins.

U.S. Patent No. 3,402,157 discloses terpolyners of 2,3-dichlorobutadiene-1,3, α-haloacrylonitrile and ethylenically unsaturated compounds and the use of the terpolymers as adhesive components along with a film-forming compound such as chlorinated natural rubber, chlorinated polypropylene, vinyl chloride copolymers and phenolic resins. The terpolymers are prepared by copolymerizing from about 60 to about 5 parts by weight of the dichlorobutadiene, from about 15 to about 60 parts by weight of the α-haloacrylonitrile and from about 5 to about 35 parts by weight of an ethylenically unsaturated compound.

U.S. Patent No. 2,078,770 describes a one-pack water-based adhesive that contains a copolymer of a butadiene such as 2,3-dihalo-1,3 butadiene and a second monomer such as α-haloacrylonitrile. The copolymer is prepared by emulsion polymerizing the two monomers such that the second monomer comprises from 12 to 49, preferably 28 to 36, weight percent of the copolymer. The water-based adhesive further contains a poly-C-nitroso aromatic compound, a surfactant, and water.

Japanese Kokai No. 56-18668 describes an aqueous adhesive composition containing an emulsion polymerized copolymer of 2,3-dichlorobutadiene-1,3 and α-haloacrylonitrile and further containing a dithiocarbamate. The dichlorobutadiene content of the total amount of α-haloacrylonitrile dichlorobutadiene can be from 5 to 95 percent by weight and is preferably in the range of from 50 to 60 percent by weight. The dithiocarbamate is disclosed as contributing significantly to the adhesive properties of the aqueous adhesive composition.

Many of the traditional adhesive compositions utilizing polydichlorobutadiene polymers or dichlorobutadiene/haloacrylonitrile copolymers require the presence of additional components, such as nitroso or carbamate compounds, in order to provide sufficient adhesive properties to meet the requirements of certain industrial applications. These additional components, in some cases, are required to be utilized in relatively large amounts in order to obtain sufficient adhesion. With respect to the use of large amounts of nitroso compounds, it has presently been discovered that under certain high temperature bonding conditions, the nitroso compounds will sublime or fume so as to create annoying and possibly hazardous conditions in the workplace. Also, in the case of an uncured elastomer being applied to a substrate coated with a nitroso compound-containing adhesive, this sublimation or fuming can cause the elastomer to be partially cured before the elastomer contacts the substrate, resulting in interference with proper adhesion.

The use of relatively large amounts of active halogen compounds, such as haloacrylonitrile comonomers, utilized to prepare copolymers with dichlorobutadiene have surprisingly been found to lead to the release of hydrogen halide, especially at high temperatures, so as to promote blistering or corrosion of the adhesive bond,

leading to premature bond failure. Active halogen compound herein refers to a compound which, when incorporated into a final polymer, will provide halogen substituents on the polymer which are very chemically reactive and which tend to undergo temperature-induced elimination, substitution, or similar reactions. Such halogen substituents include halogens which are attached to a carbon atom which is in turn adjacent to a carbon-carbon double bond and/or a functional group capable of promoting chemical activity such as dehydrohalogenation through electron withdrawal or resonance stabilization. Examples of such functional groups include a cyano group, a carboxy group, an ester group, or the like. Examples of active halogen compounds include α-haloacrylonitriles, alkyl-α-haloacrylates, α-halostyrenes, α-halovinylketones, and the like.

It has been found that many of the adhesive compositions utilizing the copolymers of 2,3-dichlorobutadiene-1,3 and α-haloacrylo-nitrile such as those described above cannot withstand the harsh, high temperature fluid and corrosive material environments currently being experienced in various automotive and industrial applications. Many of the currently available adhesive compositions will blister or rapidly corrode at the elastomer-adhesive interface in the presence of high temperature fluids or corrosive environments for the reasons described above. A need therefore exists for an elastomer-metal adhesive system that will avoid the use of relatively large amounts of nitroso compounds and active halogen compounds while maintaining sufficient bonding performance under the increasingly demanding and harsh environmental conditions currently being experienced in automotive and industrial applications.

The present invention relates to the incorporation of small amounts of certain adhesion-promoting halofunctional monomeric materials into polymeric materials which are utilized in bonding various elastomeric substrates to metal surfaces. The halofunctional materials are incorporated into polymeric materials which are applied at least in substantial contact with an elastomeric substrate to be bonded in order to promote adhesion at the elastomer-adhesive interface. By utilizing relatively small amounts of the present halofunctional adhesion promoters, an adhesive composition can be produced that does not require large amounts of additional components such as nitroso or carbamate compounds to obtain sufficient adhesion and that will withstand high temperature fluid and corrosive material environments.

The present halofunctional monomeric adhesion promoters can essentially be any compound capable of being incorporated into a polymeric material and thereby introducing an active halogen site into the polymeric material. Preferred monomeric adhesion promoters presently include α-halo-substituted monomeric compounds, such as α-haloacrylonitriles and alkyl-α-haloacrylates, which can readily be incorporated into polymers typically utilized in adhesive compositions such as polybutadiene polymers. For example, an active halogen site can be readily introduced into a polybutadiene polymer by copolymerizing a small amount of an α-haloacrylonitrile or alkyl-α-haloacrylate monomer with a halobutadiene monomer to produce a polyhalobutadiene copolymer having a small amount of the adhesion-promoting α-haloacrylonitrile or α-haloacrylate material incorporated therein. The resulting copolymer is an adhesion-promoting copolymer which can be utilized in an adhesive composition such that the copolymer is at least in substantial contact with the elastomeric substrate to be bonded. The presently preferred adhesion-promoting copolymer is a copolymer prepared by polymerizing a α-halo-substituted monomeric compound and 2,3-dichlorobutadiene- 1,3 in such a manner that results in a copolymer containing from about 0.1 to 10, preferably about 2 to 8, percent by weight of the α-halo-substituted compound.

The present invention relates to the modification of polymeric materials utilized in adhesive compositions for bonding elastomers to metal. The chemical modification involves the incorporation of certain halofunctional monomeric materials into various polymers via copolymerization.

The halofunctional monomeric materials of the present invention which are useful for modifying polymers utilized in adhesive compositions can essentially be any compound capable of being incorporated into a polymeric material so as to introduce an active halogen site into that polymeric material. Active halogen site herein refers to halogen substituents on the polymer which are subject to facile, temperature-induced elimination, substitution, or other similar reactions. Such halogen substituents include halogens which are attached to a carbon atom which is in turn adjacent to a carbon-carbon double bond and/or a functional group capable of promoting a dehydrohalogenation or substitution reaction through electron withdrawal or resonance stabilization such as a cyano group, a carboxy group, an ester group or the like. The halogen of the halofunctional materials can be chlorine, fluorine, bromine, or iodine, but is preferably chlorine or bromine. The halofunctional monomeric materials of the invention can be generically represented by the following structure:

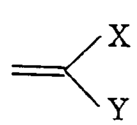

wherein X is chlorine, fluorine, bromime or iodine, and Y is a group capable of facilitating, such as by election withdrawal or resonance stabilization, the elimination, substitution or other chemical reaction of X in the final copolymer. Examples of Y include -CN, $-CO_2R$, $-C_6H_6$, $-CO_2NR$, and -C(O)R, where R can be any alkyl group but is preferably an alkyl group having from 1 to 10 carbon atoms such as methyl, ethyl, propyl, butyl, pentyl, isomers thereof and the like. Typical halofunctional monomeric materials of the present invention include α-chloroacrylonitrile, α-bromoacrylonitrile, alkyl-α-haloacrylates, α-bronostyrenes, α-chloro-vinylketone, and combinations thereof. Presently preferred halofunctional monomeric materials include α-halo-substituted monomeric compounds such as α-chloroacrylonitrile, α-bromoacrylonitrile, ethyl-α-bromoacrylate, and ethyl-α-chloroacrylate. In the modification of the polymeric materials in accordance with the invention, the halofunctional monomeric materials should be utilized in an amount sufficient to result in a polymeric material which has been chemically modified with about 0.1 to 10, preferably about to 8, percent by weight of the halofunctional monomeric material. As will be described in greater detail hereinafter, it has been discovered that utilization of the halofunctional monomeric materials in relatively minor amounts is crucial to the performance of the present invention.

The halofunctional monomeric materials of the invention are typically utilized as comonomers which can be employed to produce a copolymer containing the adhesion-promoting halofunctional mononeric materials. Typical comonomers useful for copolymerizing with the halofunctional monomeric materials of the present invention include halobutadiene monomers, such as 2,3-dichlorobutadiene-1,3, 2-chloro-butadiene, 1,1,2-trichlorobutadiene, 1,2,3-trichlorobutadiene, 2-bromo-3-chlorobutadiene, 2,3-dibromobutadiene, and combinations thereof, wit 2,3-dichlorobutadiene-1,3 being presently preferred. It is imperative that the halofunctional monomer be utilized in an amount that results in a copolymer containing from about 0.1 to 10, preferably- about 2 to 6, percent by weight of the halofunctional monomer. Particularly preferred copolymers include copolymers prepared from α-halo-substituted monomeric compounds and 2,3-dichlorobutadiene-1,3 wherein the α-halo-substituted compound content is in the range from about 2 to 8 percent by weight of the copolymer.

The halofunctional monomeric materials and the halobutadiene comonomers described above may be utilized in combination with one or more additional polymerizable comonomers in order to form terpolymers or higher polymers containing several different monomeric entities. It is only necessary that the final polymeric material contain at least one of the present halofunctional monomeric materials in the amounts specified herein. Additional comonomers for such a polymerization typically contain at least an ethylenic double bond capable of undergoing polymerization and exemplary ethylenically unsaturated monomers include styrene, acrylonitrile, chlorostyrene, acrylic acid, various acrylates including alkyl and haloalkyl acrylates and methacrylates such as ethyl acrylate and glycidyl acrylate, methacrylic acid, vinylidene chloride, vinyl toluene, α-methylstyrene and combinations thereof. If such a terpolymer or higher polymer is utilized, it is still imperative that the halofunctional monomeric material be present only in an amount from about 0.1 to 10, preferably from about 2 to 6, percent by weight of the total polymeric material.

The copolymerization of the present halofunctional monomeric materials with other comonomers such as halobutadiene monomers, as well as any additional ethylenically unsaturated monomers, may be carried out by any conventional polymerization procedure. For example, solution or suspension polymerization may be used. If solution polymerization is used, the monomers, together with a catalyst and modifiers if desired, are dissolved in a suitable inert organic solvent such as toluene, benzene, tetrahydrofuran, or the like, placed in a polymerization reactor, and polymerized.

Alternatively, if suspension polymerization is used, the monomeric ingredients are suspended as relatively small droplets in an aqueous medium and permitted to copolymerize. Emulsion polymerization may also be used in which the monomers are emulsified in an aqueous medium containing an emulsifying agent, such as for example, sodium fatty acid soaps, sodium or potassium laurate, myristateoleate, palmitate, and stearate. Other emulsifiers such as sodium lauryl sulfate or alkylaromatic sulfonates may also be used. Conventional stabilizers may be used during the suspension polymerization but they are not absolutely essential. Unpolymerized monomers may be removed by vacuum treatment at elevated temperatures or by steam distillation as is known in the art. The specific method used to remove unpolymerized monomers is a matter of choice.

The polymerization is preferably carried out in a closed vessel in which the space not occupied by the reactants is maintained free of oxygen, such as by means of a blanket of nitrogen. The induction period of the polymerization reaction is lengthened by the presence of oxygen and it is preferred to eliminate the oxygen from the reaction. The polymerization may be carried out over a wide range of temperature such as from about 0° C to about 100° C. If temperatures lower than 0° C are utilized in the emulsion or suspension polymerization, antifreeze components such as methanol should be employed.

The polymerization of the monomeric ingredients is preferably carried out by mixing the monomers and subjecting them to moderate polymerization conditions until all of the halofunctional monomeric materials and other comonomers have been polymerized. The polymerization may be promoted by the addition of free radical-generating catalysts. The presence of a catalyst in some cases assures more rapid onset of the reaction and more reproducible results. Suitable free radical-generating catalysts include hydrogen peroxide, sodium, potassium or ammonium persulfates and perborates, sodium bisulphite, di-t-butyl peroxide, benzoyl peroxide, acetyl peroxide, and azo-bis-isobutyronitrile. Well-known chain transfer agents such as alkyl mercaptans and dialkyl xanthogen disulfides may also be used during the polymerization.

Polymeric materials which have been modified as described above with the present halofunctional monomeric materials may be utilized as an adhesive, primer, or coating for any substrate or surface capable of receiving the polymeric materials or may be incorporated into a variety of elastomer-metal adhesives or metal coatings. The modified polymeric materials can be utilized in a variety of compositions including one-coat and two-coat adhesive compositions, primers, or coatings and are preferably utilized in elastomer-metal adhesive conpositions in order to improve adhesive performance at the elastomer-adhesive interface. The modified polymeric material may be utilized in combination with various solvents, polymeric materials, or other adhesive components traditionally utilized in adhesive compositions. The modified polymeric materials are particularly effective when utilized as an overcoat component in combination with a traditional phenolic resin-based primer component wherein the polymeric material is applied over the primer-coated metal surface and bonded under heat and pressure.

It has surprisingly been discovered that the use of active halogen-containing materials in an excess of about 10 percent by weight of a polymeric material can result in the release of hydrogen halide, especially under severe conditions, so as to result in bond failure. By utilizing a low level of halofunctional monomeric material to modify a polymer in accordance with the present invention, a modified polymer can be obtained that exhibits elastomer bonding activity substantially superior to the unmodified polymer and the adverse effects related to the presence of an excess of active halogen-containing materials can be minimized or eliminated such that the adhesive bond can withstand high temperatures and corrosive environments.

Prior to the discovery of the present invention, it was not known why prior adhesives containing active halogen-containing materials would exhibit a tendency to deteriorate, especially in high temperature environments. The discovery that polymeric materials containing an excess of 10 percent by weight of active-halogen containing materials would release detrimentally acidic hydrogen halide, especially under severe conditions, and thereby cause bond failure is therefore considered to be a major part of the present invention.

It is presently believed that the active halogen sites of the modified polymers chemically interact or crosslink with the surface of the elastomer substrate so as to enhance bonding at the elastomer-adhesive interface. It is therefore imperative that the modified polymeric material be utilized in adhesive compositions so that the modified polymer is substantially in contact with the elastomer substrate. "Substantially in contact" herein refers to at least minimal physical contact between the modified polymeric material and the surface of the elastomer substrate. If a two-component adhesive is utilized, the modified polymeric materials should be utilized in the component of the adhesive which will be primarily in contact with the elastomer substrate. In the case of a one-component adhesive, care must be taken to ensure that a sufficient amount of modified polymer is utilized and that the polymer is thoroughly mixed in the adhesive so that the polymer will be guaranteed to contact the elastomer substrate.

Although not required, adhesive compositions which utilize the present modified polymers can contain small amounts of a nitroso compound in order to further aid in adhesion. It should be emphasized that the use of a nitroso compound in large amounts is neither required nor desired in the present invention since it has presently been discovered that by modifying a polymeric material with the relatively low amounts of halofunctional monomeric materials disclosed herein, the traditionally larger amounts of nitroso compounds previously required for adhesion can be partially or totally eliminated with no adverse effect on adhesive ability.

The nitroso compound can be selected from any of the aromatic hydrocarbons, such as benzenes, naphthalenes, anthracenes, biphenyls, and the like, containing at least two nitroso groups attached directly to nonadjacent ring-carbon atoms. More particularly, such nitroso compounds are described as aromatic compounds having from 1 to 3 aromatic nuclei, including fused aromatic nuclei, having from 2 to 6 nitroso groups attached directly to nonadjacent nuclear-carbon atoms. The present preferred nitroso compounds are the dinitroso aromatic compounds, especially the dinitrosobenzenes and dinitrosonaphthalenes, such as the meta- or para-dinitrosobenzenes and the meta- or para-dinitrosonaphthalenes. The nuclear hydrogen atoms of the aromatic nucleus can be replaced by alkyl, alkoxy, cycloalkyl, aryl, arylalkyl, alkylaryl, arylamine, arylnitroso, amino, halogen, and like groups. The presence of such substituents on the aromatic nuclei has little effect on the activity of the nitroso compounds in the present invention. As far as is presently known, there is no limitation as to the character of the substituent, and such substituents can be organic or inorganic in nature. Thus, where reference is made herein to nitroso compound, it will be understood to include both substituted and unsubstituted nitroso compounds, unless otherwise specified.

Particularly preferred nitroso compounds are characterized by the formula:

(R)m - Ar - $(NO)^2$

wherein Ar is selected from the group consisting of phenylene and naphthalene; R is a monovalent organic radical selected from the group consisting of alkyl, cycloalkyl, aryl, arylalkyl, alkylaryl, arylamine, and alkoxy radicals having from 1 to 20 carbon atoms, amino, or halogen, and is preferably an alkyl group having from 1 to 6 carbon atoms; and m is zero, 1, 2, 3, or 4, and preferably is zero.

A partial nonlimiting listing of nitroso compounds which are suitable for use in the practice of the invention include p-dinitrosobenzene, m-dinitrosobenzene, m-dinitrosonaphthalene, p-diniirosonapthalene, 2,5-dinitroso-p-cymeme, 2-methyl-1,4-dinitrosobenzene, 2-methyl-5-chloro- 1,4-dinitrosobenzene, 2-fluoro-1,4-dinitrosobenzene, 2-methoxy- 1-3-dinitrosobenzene, 5-chloro- 1,3-dinitrosobenzene, 2-benzyl-1,4-dinitrosobenzene, 2-cyclohexyl-1,4-dinitrosobenzene and combinations thereof. Particularly preferred nitroso compounds include p-dinitrosobenzene and m-dinitrosobenzene. The nitroso compound, if employed, may be utilized in an amount from about 0 to 50, preferably from about 3 to 15, percent by weight of the adhesive composition.

Adhesive compositions containing the modified polymeric materials of the present invention can optionally contain other well-known additives including plasticizers, fillers, pigments, film formers, reinforcing agents and the like, in amounts employed by those skilled in the adhesive arts to obtain desired color and consistency.

The components of an adhesive composition employing the present modified polymeric materials of the present invention are typically applied in liquid solvent form by utilizing a solvent to dissolve the various components. Typical solvents useful for dissolving the components include various aromatic solvents such as xylene, toluene, chlorobenzene, dichlorobenzene and halogenated aliphatic hydrocarbons such as trichloroethylene, perchloroethylene, and propylene dichloride, with xylene and toluene being the preferred solvents. The solvent for the adhesive composition is utilized in an amount sufficient to provide a coating composition having a viscosity that will result in the application of a layer thickness of between about 0.05 and 2.0 mils, preferably between about 0.2 and 1.5 mils.

The components of the present invention can also be applied as an aqueous formulation. When the adhesive of the present invention is applied in aqueous form, the modified polymeric material should be prepared by emulsion or suspension polymerization techniques known in the art including techniques utilizing anionic surfactants such as alkyl aromatic sulfonates.

As stated above, the modified polymeric materials of the present invention can be incorporated into any type of adhesive, primer or coating applied to any type of substrate or surface. The modified polymeric materials are preferably utilized in an adhesive composition that is applied to bond an elastomeric substrate to a metal surface. The present modified polymeric materials are typically employed in an overcoat adhesive composition that is applied to a metal surface which has been coated with a primer such as a traditional phenolic resin-based primer composition. The composition may be applied to the coated metal surface by spraying, dipping, brushing, wiping, or the like, after which the adhesive is permitted to dry. The metal surface and elastomeric substrate are then typically brought together under heat and pressure to complete the bonding procedure. In some applications involving the bonding of pre-vulcanized rubber, it may be possible to apply the overcoat component directly to the elastomeric substrate.

The surface of the metal and the elastomeric substrate are typically brought together under a pressure of from about 20.7 to 172.4 Mega Pascals (MPa), preferably from about 20 MPa to 50 MPa. The resulting elastomer-metal assembly is simultaneously heated to a temperature of from about 140°C to about 200°C, preferably from about 150°C to 170°C. The assembly should remain under the applied pressure and temperature for a period of from about 3 minutes to 60 minutes, depending on the cure rate and thickness of the elastomeric substrate. This process may be carried out by applying the elastomeric substrate as a semi-fluid material to the metal surface as in, for example, an injection-molding process. The process may also be carried out by utilizing compression molding, transfer molding or autoclave curing techniques. After the process is complete, the bond is fully vulcanized and ready for use in a final application.

The substrate, which may be bonded to a surface such as a metal surface in accordance with the present invention, can essentially be any substrate capable of receiving the adhesive, is preferably a polymeric substrate, and is most preferably an elastomeric substrate selected from any of the natural rubbers and olefinic synthetic rubbers including polychloroprene, polybutadiene, neoprene, Buna-S, Buna-N, butyl rubber, brominated butyl rubber, nitrile rubber, and the like. The surface to which the substrate is bonded can be any surface capable of receiving the adhesive and is preferably a metal surface selected from any of the common structural metals such as iron, steel (including stainless steel), lead, aluminum, copper, brass, bronze, Monel metal, nickel, zinc, and the like. The adhesive system of the present invention has been found to be particularly useful for bonding rubber to steel.

The following examples are presented in order to further illustrate the invention but are not intended to limit in any manner the scope of the invention.

**Example 1**

A series of copolymers of 2,3-dichlorobutadiene-1,3 and α-chloroacrylonitrile are prepared according to the procedure described below utilizing the following amounts of monomers.

| Copolymer | 2,3-dichloro-butadiene-1,3 (g) | α-chloro-acrylonitrile (g) | % α-chloro-acrylonitrile |
|---|---|---|---|
| A | 100 | 0 | 0 |
| B | 97 | 3 | 3 |
| C | 94 | 6 | 6 |
| D | 91 | 9 | 9 |
| E | 85 | 15 | 15 |

To a 500 ml reaction kettle are added 2.0 g of an alkyl aromatic sulfonate (DOWFAX 2A1, DOW CHEMICAL COMPANY) as a surfactant, 0.3 g of dodecyl mercaptan as a chain transfer agent, 0.4 g of sodium bisulphite as a free radical initiator and 100 g of water. The reaction kettle is blanketed by nitrogen, equipped with a reflux condenser and maintained between 50° and 60° C with stirring. To the reaction kettle is them added 10 percent of a mixture containing the monomers, 0.4 g of ammonium persulfate as a free radical initiator, 3.0 g of DOWFAX 2A1 and 27 g of water. After formation of the seed polymer, the remaining 90 percent of the mixture is fed into the kettle over a period of 1.5 hours. The reaction is then carried out for an additional hour after completion of the addition of the mixture. The resulting polymer is then precipitated from excess methanol and dried

The polymers prepared as above are then dissolved in hot xylene to form a solution having a solids content of 15 percent. The resulting solution is then applied at a dry film thickness of between 0.6 and 1.0 ml to degreased, grit-blasted steel coupons that have previously been coated with a phenolic resin-based primer (Chemlok® 205, Lord Corporation). The coated metal coupons are then bonded to E-218 (55-60 durometer Shore-A semi-EV cure natural rubber) and HC-202 (60-65 durometer Shore-A styrene butadiene rubber) substrates by compression molding for 15 and 30 minutes, respectively, at 307° F. Adhesion is then measured according to ASTM-429B. The results of the tests are shown below in Table 1.

In the data below, reference is made to failure in the rubber body (R), and failure is expressed in terms of percent. A high percent of failure in the rubber is desirable, since this indicates that the adhesive bond is stronger than the rubber itself.

Table 1

| HC-202 Substrate | | |
|---|---|---|
| Copolymer | % Chloroacrylonitrile | % R Failure |
| A | 0 | 30 |
| B | 3 | 90 |
| C | 6 | 59 |
| D | 9 | 45 |
| E | 15 | 40 |

| E-218 Substrate | | |
|---|---|---|
| Copolymer | % Chloroacrylonitrile | % R Failure |
| A | 0 | 26 |
| B | 3 | 66 |
| C | 6 | 11 |
| D | 9 | 0 |
| E | 15 | 0 |

**Example 2**

A series of copolymers of 2,3-dichlorobutadiene-1,3 and α-bromoacrylonitrile are prepared according to the procedure of Example 1 utilizing the following amounts of monomers.

| Copolymer | 2,3-dichlorobutadiene-1,3 (g) | α-bromo-acrylonitrile (g) | % α-bromo-acrylonitrile |
|---|---|---|---|
| F | 100 | 0 | 0 |
| G | 98 | 2 | 2 |
| H | 96 | 4 | 4 |
| I | 92 | 8 | 8 |
| J | 88 | 12 | 12 |

The polymers prepared as above are then dissolved in hot xylene to form a solution having a solids content of 15 percent. The resulting solution is then applied at a dry film thickness of between 0.6 and 1.0 ml to degreased, grit-blasted steel coupons that have previously been coated will an environmentally resistant phenolic resin primer (Primer No. 5708-21, Lord Corporation).

The coated metal coupons are then bonded to the E-218 substrate by compression molding for 15 minutes at a temperature of 307° F. The bonded coupons are then prepared according to ASTM-429B, after which the leading rubber edge of each of the bonded coupons is stressed by tying the edge back to 180° of its original position. The stressed leading edge is then scored with a razor blade, and the parts are then immersed in a 90-10 ethylene glycol/water mixture at 300° F for 5 days in order to simulate severe high temperature fluid environments. The parts are then removed from the mixture and cooled after which the rubber is peeled manually from the metal. The percent rubber failure of the adhesive bonds is disclosed in Table 2 below.

Table 2

| E-218 Substrate | | |
|---|---|---|
| Copolymer | % Bromoacrylonitrile | % R Failure |
| F | 0 | 28 |
| G | 2 | 91 |
| H | 4 | 99 |
| I | 8 | 93 |
| J | 12 | 58 |

As can be seen from the above data, polymeric materials containing in excess of about 10 percent by weight of halofunctional monomeric materials do not produce effective adhesive bonds. As stated above, this poor performance is believed to be caused by the release of hydrogen halide, which interferes with adhesion. By utilizing the modified polymeric materials of the present invention that contain less than 10 percent by weight halofunctional monomeric materials, improved adhesive bonds can be obtained as shown by the above data.

## Claims

1. A composition of matter comprising a copolymer of a halobutadiene monomer and a halofunctional monomeric material wherein the halofunctional monomeric material comprises from about 0.1 to 10 percent by weight of the copolymer.

2. A composition of matter comprising a terpolymer or higher polymer of a halobutadiene monomer, a halofunctional monomeric material and one or more additional polymerizable comonomers wherein the halofunctional monomeric material comprises from about 0.1 to 10 percent by weight of the terpolymer or higher polymer.

3. A composition of matter according to Claim 2 wherein the one or more additional polymerizable comonomers is selected from the group consisting of styrene, acrylonitrile, chlorostyrene, acrylic acid, various acrylates including alkyl and haloalkyl acrylates and methacrylates such as ethyl acrylate and glycidyl acrylate, methacrylic acid, vinylidene chloride, vinyl toluene, $\alpha$methylstyrene and combinations thereof.

4. A composition of matter according to any one of the preceding claims wherein the halobutadiene monomer is selected from the group consisting of 2,3-dichlorobutadiene-1,3, 2-chlorobutadiene, 1,1,2-trichlorobutadiene, 1,2,3-trichlorobutadiene, 2-bromo-3-chlorobutadiene, 2,3-dibromobutadiene, and combinations thereof.

5. A composition of matter according to any one of the preceding claims wherein the haofunctional monomeric materail is represented by the following structure:

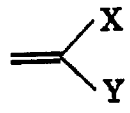

wherein X is chlorine, fluorine, bromine or iodine, and Y is a group capable of facilitating, such as by electron withdrawal or resonance stabilization, the elimination, substitution or other chemical reaction of X in the final copolymer.

6. A composition of matter according to Claim 5 wherein Y can be -CN, -$CO_2$R, -$C_6H_5$, -$CO_2$NR, or -C(O)R, where R is an alkyl group having from 1 to 10 carbon atoms.

7. A composition of matter according to any one of the preceding claims wherein the halofunctional monomeric material is selected from the group consisting of α-chloroacrylonitrile, α-bromoacrylonitrile, alkyl-α-haloacrylates, α-bromostyrenes, α-chlorovinylketone, and combinations thereof.

8. A composition of matter according to Claim 7 wherein the halofunctional monomeric material is an α-halo-substituted monomeric compound selected from the group consisting of α-chloroacrylonitrile, α-bromoacrylonitrile, ethyl-α-bromoacrylate, and ethyl-α-chloroacrylate.

9. A composition of matter according to Claim 8 wherein the α-halo-substituted compound is α-bromoacrylonitrile.

10. A composition of matter according to Claim 8 wherein the α-halo-substituted compound is α-chloroacrylonitrile.

11. A composition of matter according to Claim 8 wherein the α-halo-substituted compound is ethyl-α-bromoacrylate.

12. A composition of matter according to Claim 8 wherein the α-halo-substituted compound is ethyl-α-chloroacrylate.

13. A composition of matter according to any one of the preceding claims wherein the halobutadiene monomer is 2,3-dichlorobutadiene-1,3.

14. A composition of matter according to any one of the preceding claims wherein the halofunctional monomeric material comprises from about 2 to 8 percent by weight of the copolymer, terpolymer or higher polymer.

15. A composition of matter according to any one of the preceding claims being an adhesive composition.

16. A method of bonding a metal surface and an elastomeric substrate comprising the step of applying, at least in substantial contact with the elastomeric substrate, a composition of matter as claimed in any one of the preceding claims.

17. A method according to Claim 16 wherein the bonding is carried out under heat and pressure.

18. An elastomer-metal assembly prepared in accordance with the method of Claim 16 or Claim 17.

European Patent Office

# EUROPEAN SEARCH REPORT

Application Number

EP 92 30 3215

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-858 841 (FARBENFABRIKEN BAYER AG)<br>* claim 8 * | 1,4-8, 10,14 | C08F236/16<br>C09J119/00<br>C09J111/00 |
| X | CHEMICAL ABSTRACTS, vol. 96, no. 12, 1981, Columbus, Ohio, US;<br>abstract no. 86794D,<br>A.V.GEVORKYAN ET AL.: 'LATEX'<br>& SU-A-876652 30-08-1981<br>* abstract * | 1,4-8, 10,14-15 | |
| D,A | GB-A-2 078 770 (LORD CORP.)<br>* claim 1 *<br>* examples * | 1,4-18 | |
| A | DE-A-1 570 245 (BORG-WARNER CORP.)<br>* claim 1 *<br>* column 7, line 25 - line 35 * | 1-8,10, 13,15-18 | |
| D | & US-A-3 402 157 | | |

TECHNICAL FIELDS SEARCHED (Int. Cl.5 )

C08F
C09J

The present search report has been drawn up for all claims

| Place of search | Date of completion of the search | Examiner |
|---|---|---|
| THE HAGUE | 10 JULY 1992 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)